# EUROPEAN PATENT SPECIFICATION

(11) **EP 0 265 217 B1**
(45) Date of publication and mention of the grant of the patent: **03.03.1993**
(21) Application number: 87309237.3
(22) Date of filing: 20.10.1987
(51) Int. Cl.: G02F 1/133, G02F 1/03

(54) **Electrode structure for use in an electro-optical device**
Elektrodenstruktur zur Anwendung in einer elektro-optischen Vorrichtung
Structure d'électrode pour l'utilisation dans un dispositif électro-optique

(30) Priority: 22.10.1986 JP 251075/86
(43) Date of publication of application: 27.04.1988
(73) Proprietor: SEIKO INSTRUMENTS INC., Tokyo 136 (JP)
(72) Inventor: Tsunoda, Yukiyoshi, Koto-ku Tokyo (JP); Sakai, Tohru, Koto-ku Tokyo (JP)
(74) Representative: Miller, Joseph

(56) References cited:
- EP-A- 0 011 408
- FR-A- 2 221 892
- GB-A- 2 093 442
- GB-A- 2 111 285
- GB-A- 2 155 023
- PATENT ABSTRACTS OF JAPAN, vol. 10, no. 86 (P-443)[2143], 4th April 1986; & JP-A-60 222 822
- PATENT ABSTRACTS OF JAPAN, vol. 9, no. 163 (P-371)[1886], 9th July 1985; & JP-A-60 39 616
- PATENT ABSTRACTS OF JAPAN, vol. 10, no. 143 (P-459)[2200], 27th May 1986; & JP-A-60 263 123

## Description

The present invention relates to an elecctrode structure for use in an electro-optical device such, for example, as a liquid crystal display provided with a colour filter, or the like.

An electrode structure for use in an electro-optical device is known comprising a substrate, a colour filter of organic matter on a substrate, and an electrically conductive film of ITO (Indium-tin oxide) on the colour filter. In such a device, however, there is likely to be inferior conduction at the portions where the ITO film covers step portions of the colour filter.

According, however, to the present invention, there is provided an electrode structure for use in an electro-optical device as claimed in claim 1.

Since both the electrically conductive film and the colour filter are made of organic material, one can avoid the stress strain whcih normally occurs during manufacture and which arises from the fact that the electrically conductive film is made of inorganic material while the colour filter is made of organic material. Consequently, the inferior conduction referred to above will not occur.

The resin may be acrylic resin, epoxy resin, vinyl chloride resin, polyimide, polyamide, polyester, polycarbonate, polyethylene, polyurethane, polysulfone or polypropylene.

Preferably, the electrically conductive material comprises particles of ITO, In₂O₃, SnO₂, ZnO, Sb₂O₅, Au, Ag, Pt, Cu, Ni or Cr.

The colour filter may be formed by an electro-deposition method, a printing method or a photo-lithographic method.

The electrically conductive film may have an orientation film thereon.

The orientation film may be made of polyimide, silane, polyvinyl alcohol, polyamide, polyamide- imide, fluorine-containing polymer, SiO, SiO₂, Al₂O₃ or TiO₂.

The electrically conductive film may be formed by printing, spin coating, spraying or dipping.

The electrically conductive film may be formed of strips. Alternatively, the electrically conductive film may be formed over the whole surface of the substrate or the part of the latter provided with the colour filter.

The electrically conductive film may be formed by treating a film of an organic metallic compound or a metallic compound so as to give it electrical conductivity.

The electrode structure may form part of an electro-optical device having TFT active elements.

Alternatively, the electrode structure may form part of an electro-optical device having non-linear resistive elements.

The electrically conductive film may constitute an electrode for driving an electro-optical material such as liquid crystal material.

As will be appreciated, in the case of the present invention, an electrically conductive organic film, such as a resin with electrically conductive fine particles dispersed therein, may be employed as a driving electrode in place of the known ITO film. This arrangement can prevent not only inferior conduction at step portions of the colour filter, but also the disturbance of orientation of the liquid crystal material because both the electrically conductive film and the colour filter are made of organic material and their interface does not get distorted due to stress.

The present invention thus enables a colour electro-optical device to be produced at a low cost of production but with high reliability.

The invention is illustrated, merely by way of example, in the accompanying drawings, in which:-
Figure 1 is a sectional view of an electro-optical device which employs an electrode structure in accordance with one embodiment of the present invention;
Figures 2 and 3 are sectional views of known electro-optical devices; and
Figure 4 is a sectional view of an active matrix electro-optical device which employs an electrode structure according to the present invention.

Several methods are known to accomplish coloured liquid crystal displays, coloured electro-optical devices, and the like. Among these methods, the most common system is one in which a colour filter is formed on one of two substrates because in this case a full colour display can easily be obtained and a television display can be produced. Known colour filter substrates are shown in Figures 2 and 3.

Referring to Figures 2 and 3, an electro-optical device comprises two spaced apart glass substrates 1 on one of which there is a colour filter 2 and on the other of which there is an ITO (Indium-Tin oxide) film 3, a liquid crystal layer 4 being disposed between the substrate 1. The colour filter 2 is formed by dyeing, electro-deposition or printing. The ITO film 3 is formed by sputtering or vacuum deposition and is then patterned into an arbitrary shape.

Figure 2 shows a construction in which the ITO film 3 is formed on the colour filter 2, and Figure 3 shows a construction in which the colour filter 2 is formed on the ITO film 3. These constructions, however, have the following problems, respectively. In the construction shown in Figure 2, inferior conduction is likely to occur at the portions where the ITO film 3 covers step portions of the colour filter 2. Whereas the colour filter 2 ordinarily consists of organic matter, the ITO film 3 consists of inorganic matter, so that stress-strain occurs due to thermal impact applied during the fabrication process of a panel and exerts an adverse influence on the orientation of the liquid crystal layer 4. This problem can be prevented by applying an over-coating to the surface of the colour filter 2 and then forming the ITO film 3 on the over-coating, but this results in a complicated production process and in an increase in the cost of production.

On the other hand, the construction shown in Figure 3 is free from the problem of inferior conduction of the ITO film 3, but has the disadvantage that a voltage applied to the liquid crystal layer 4 drops because the colour filter 2 acts as insulating material between the liquid crystal layer 4 and the ITO film 3 which forms the electrode for driving the liquid crystal layer 4. To cope with this problem, attempts have been made to increase the dielectric constant of the colour filter 2 or to render the colour filter 2 itself conductive, but such attempts have not yet produced entirely practical results.

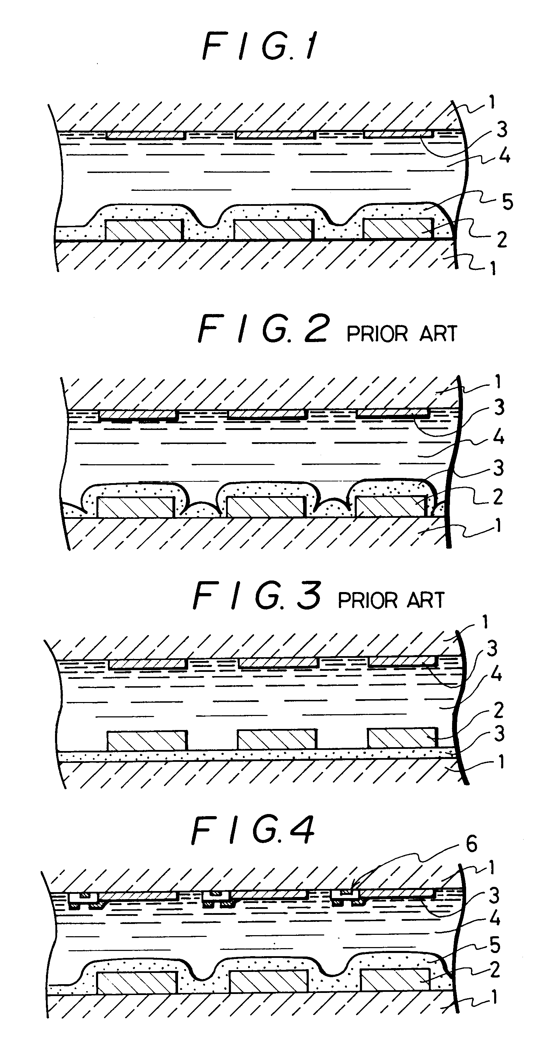

In Figure 1 there is therefore shown an electro-optical device according to the present invention having upper and lower substrates 1 made of glass, plastics, ceramics or the like. At least one of the substrates 1 is light-transmissive. The device of Figure 1 also comprises a colour filter; an electro-conductive film 3 made of ITO, SnO₂ or the like; an electro-optical material layer 4 such as a liquid crystal layer; and an electrically conductive coated film 5. An orientation film made of polyimide, silane, polyvinyl alcohol, polyamide, polyamide-imide, fluorine-containing polymer, SiO, SiO₂, Al₂O₃ , TiO₂ or the like is formed on the surface of the electro-conductive film 3 and is formed on the surface of the electrically conductive coated film 5, and the orientation films are then subjected to alignment treatment such as rubbing treatment, oblique vapour deposition as shown in US-A-3,834,792, or the like. The colour filter 2 is formed by an electro-deposition method (as disclosed, for example, in US-A-4,522,691), a printing method, a photo-lithographic method, or the like.

The device of Figure 1 is given a dot matrix electrode structure by the electro-conductive film 3 and by the electrically conducive coated film 5 which crosses it. The dot matrix electrode device may be utilized for a simple matrix electrode device, a 2-terminal device having a non-linear-resistive element such as a non-stoichiometric compound of silicon oxide, silicon nitride, silicon carbide, germanium oxide, germanium nitride, germanium carbide (as disclosed in EP-A3-182,484 or EP-A2-202,092), MIM (as disclosed, for example, in US-A-4,413,883), a varistor, a ring diode or the like.

### Example 1

A dispersion formed by dispersing fine particles of ITO in an acrylic type resin was printed in a strip shape, i.e. in the form of strips, by offset printing and then baked on a glass substrate 1 on which colour filters 2 were formed to provide 480 × 128 unit pixels. Thus, a strip-like electrically conductive film 5 was formed on the colour filters 2. This strip-like electrically conductive film 5 was inspected by a microscope and was subjected to electrical measurement, but no inferior conduction was found to occur in any of the 480 strips. An orientation film such as polyimide was formed on the surface of the electrically conductive film 5 and rubbed, and then the liquid crystal display having the structure shown in Figure 1 was fabricated. There was thus obtained a good colour display device.

It has been a customary practice to form the ITO film as the display electrode by use of a vacuum technique such as sputtering but the electrically conductive film 5 can be formed as the display electrode by a printing technique so that the production process becomes easier and simpler and the cost of production can be reduced drastically.

### Example 2

Figure 4 shows an embodiment of a TFT active matrix LC display device utilizing the invention. In Figure 4, each of the reference numerals 1 to 5 indicates a part similar to the correspondingly numbered part of Figure 1. If the colour filter 2 is formed by the electro-deposition method, a plurality of electrodes are formed on the lower substrate 1 and thereafter a multicolour filter layer 2 is formed on each of the electrodes by electro-deposition. The electrically conductive film 5 is then coated on the colour filter 2.

The device of Figure 4 comprises a thin film transistor 6, an ITO film 3 acting as a pixel electrode, a colour filter 2 and an electrically conductive resin film 5 which acts as an opposing electrode. In the active matrix display, the thin film transistor 6 disposed on each pixel is turned ON and OFF to drive the liquid crystal layer 4. Therefore, the electrically conductive resin film which forms the opposite electrode may be kept at a common potential. In other words, the electrically conductive resin film 5 need not have a strip pattern but may be formed substantially uniformly on the surface which is in contact with the liquid crystal layer 4 (the so-called "whole surface contact electrode").

If the electrically conductive coated film 5 is formed in a strip pattern as in Example 1, the resistance value of the driving electrode becomes somewhat higher than that of a known ITO film and the voltage applied to the electro-optical material layer, such as the liquid crystal layer 4, will drop. However, if the conductive film 5 is used in the form of a "whole surface contact electrode", this problem does not occur and the device of the invention can be employed sufficiently even for a large scale panel.

Therefore, the present invention is extremely useful in making large scale, high precision active matrix liquid crystal display having an extremely small pixel pitch irrespective of printing accuracy.

### Example 3

In the liquid crystal devices shown in Figures 1 and 4, after the orientation film was formed on the electrically conductive resin film 5, orientation treatment such as rubbing was performed, but the electrically conductive resin film 5 itself can be used as the orientation film. Namely, in the case of the present Example, fine ITO particles were dispersed in the polyimide resin used as the orientation film of the liquid crystal device, and this film was coated on the colour filter 2 in the same way as in Example 1 to form the electrically conductive resin film 5. Furthermore, this electrically conductive resin film was rubbed so as to make a liquid crystal display having the same structure as the one shown in Figure 1. It was confirmed that a good colour display could be made in this manner. This method could form both the conductive film and the orientation film by a single process and could further reduce the cost of production.

The resin of the electrically conductive coated organic film may, for example, be acrylic resin, epoxy resin, vinyl chloride resin, polyimide, polyamide, polyester, polycarbonate, polyethylene, polyurethane, polysulfone or polypropylene.

The conductive fine particles dispersed in the resin may, for example, be ITO (Indium-Tin Oxide), In₂O₃, SnO₂, ZnO, Sb₂O₅ Au, Ag, Pt Cu, Ni or Cr.

Besides a resin having electrically conductive fine particles dispersed therein, it is also possible to use, as the electrically conductive coated film, organic metallic compounds such as alkoxides of In and Sn, organic metallic compounds of chlorides of In and Sn, and the like, by coating the compound and reacting it by heat-treatment, hydrolysis or the like so as to impart electrical conductivity. Various coating methods can be employed such as printing, spin coating, spraying, dipping, and so forth.

A highly reliable colour electro-optical device can be obtained at a reduced cost of production by the use of an electrically conductive coated film as the electrode of an electro-optical device, as described above.

## Claims

1. An electrode structure for use in an electro-optical device comprising: a substrate (1); a plurality of colour filters (2) of organic material on the substrate (1); and an electrically conductive film (5) overlying said colour filters (2), characterised in that the electrically conductive film (5) is made of a resin having electrically conductive material dispersed therein and that said film (5) is in direct contact with said colour filters (2).

2. An electrode structure as claimed in claim 1 characterised in that the resin is acrylic resin, epoxy resin, vinyl chloride resin, polyimide, polyamide, polyester, polycarbonate, polyethylene, polyurethane, polysulfone or polypropylene.

3. An electrode structure as claimed in claim 1 or 2 characterised in that the electrically conductive material comprises particles of ITO, In₂O₃, SnO₂, ZnO, Sb₂O₅, Au, Ag, Pt, Cu, Ni, or Cr.

4. An electrode structure as claimed in any preceding claim characterised in that the colour filter (2) is formed by an electro-deposition method, a printing method or a photo-lithographic method.

5. An electrode structure as claimed in any preceding claim characterised in that the electrically conductive film (5) has an orientation film thereon.

6. An electrode structure as claimed in claim 5 characterised in that the orientation film is made of polyimide, silane, polyvinyl alcohol, polyamide, polyamide-imide, fluorine-containing polymer, SiO, SiO₂, Al₂O₃ or TiO₂.

7. An electrode structure as claimed in any preceding claim characterised in that the electrically conductive film (5) is formed by printing, spin coating, spraying or dipping.

8. An electrode structure as claimed in any preceding claim characterised in that the electrically conductive film (5) is formed of strips.

9. An electrode structure as claimed in any of claims 1-7 characterised in that the electrically conductive film (5) is formed over the whole surface of the substrate (1) or the part of the latter provided with the colour filters (2).

10. An electrode structure as claimed in any preceding claim characterised in that the electrically conductive film (5) is formed by treating a film of an organic metallic compound so as to give it electrical conductivity.

11. An electrode structure as claimed in any preceding claim characterised in that the electrode structure forms part of an electro-optical device having TFT active elements.

12. An electrode structure as claimed in any of claims 1-10 characterised in that the electrode structure forms part of an electro-optical device having non-linear resistive elements.

## Patentansprüche

1. Elektrodenstruktur zur Benutzung in einer elektrooptischen Vorrichtung, umfassend
- ein Substrat (1);
- eine Vielzahl von Farbfiltern (2) aus organischem Material auf dem Substrat (1); und
- einen über den Farbfiltern (2) liegenden elektrisch leitfähigen Film (5),
**dadurch gekennzeichnet,** daß
der elektrisch leitfähige Film (5) aus Harz mit darin fein verteiltem elektrisch leitfähigem Material besteht und
daß der Film (5) in direktem Kontakt mit den Farbfiltern (2) steht.

2. Elektrodenstruktur nach Anspruch 1, dadurch gekennzeichnet, daß das Harz Acrylharz, Epoxidharz, Vinylchloridharz, Polyimid, Polyamid, Polyester, Polycarbonat, Polyethylen, Polyurethan, Polysulfon oder Polypropylen ist.

3. Elektrodenstruktur nach Anspruch 1 oder 2, dadurch gekennzeichnet, daß das elektrisch leitfähige Material Partikel aus ITO, In₂O₃, SnO₂, ZnO, Sb₂O₅, Au, Ag, Pt, Cu, Ni oder Cr umfaßt.

4. Elektrodenstruktur nach einem der vorhergehenden Ansprüche, dadurch gekennzeichnet, daß der Farbfilter (2) durch ein Elektroablagerungsverfahren, ein Druckverfahren oder durch Fotolithografie gebildet ist.

5. Elektrodenstruktur nach einem der vorhergehenden Ansprüche, dadurch gekennzeichnet, daß der elektrisch leitfähige Film (5) einen Orientierungsfilm trägt.

6. Elektrodenstruktur nach Anspruch 5, dadurch gekennzeichnet, daß der Orientierungsfilm aus Polyimid, Silan, Polyvinylalkohol, Polyamid, Polyamidimid, einem Fluor enthaltenden Polymer, SiO, SiO₂, Al₂O₃ oder TiO₂ hergestellt ist.

7. Elektrodenstruktur nach einem der vorhergehenden Ansprüche, dadurch gekennzeichnet, daß der elektrisch leitfähige Film (5) durch Drucken, Schleuderbeschichten, Spritzen oder Eintauchen gebildet ist.

8. Elektrodenstruktur nach einem der vorhergehenden Ansprüche, dadurch gekennzeichnet, daß der elektrisch leitfähige Film (5) aus Streifen gebildet ist.

9. Elektrodenstruktur nach einem der Ansprüche 1 bis 7, dadurch gekennzeichnet, daß sich der elektrisch leitfähige Film (5) über die ganze Oberfläche des Substrats (1) erstreckt oder sich über den Bereich des Substrats erstreckt, in welchem die Farbfilter (2) vorgesehen sind.

10. Elektrodenstruktur nach einem der vorhergehenden Ansprüche, dadurch gekennzeichnet, daß der elektrisch leitfähige Film (5) durch derartiges Behandeln eines Films einer organischen Metallverbindung gebildet ist, daß er elektrisch leitfähigkeit wird.

11. Elektrodenstruktur nach einem der vorhergehenden Ansprüche, dadurch gekennzeichnet, daß die Elektrodenstruktur Teil einer elektrooptischen Vorrichtung mit TFT(Dünnfilmtransistor)-Aktivelementen ist.

12. Elektrodenstruktur nach einem der Ansprüche 1 bis 10, dadurch gekennzeichnet, daß die Elektrodenstruktur Teil einer elektrooptischen Vorrichtung mit nichtlinearen Widerstandselementen ist.

## Revendications

1. Une structure d'électrodes prévue pour l'utilisation dans un dispositif électro-optique comprenant : un substrat (1); un ensemble de filtres de couleurs (2) en un matériau organique sur le substrat (1); et une pellicule conductrice de l'électricité (5) recouvrant les filtres de couleurs (2), caractérisée en ce que la pellicule conductrice de l'électricité (5) est constituée par une résine dans laquelle est dispersé un matériau conducteur de l'électricité, et en ce que cette pellicule (5) est en contact direct avec les filtres de couleurs (2).

2. Une structure d'électrodes selon la revendication 1, caractérisée en ce que la résine est constituée par l'un des corps suivants : résine acrylique, résine époxy, résine de chorure de vinyle, polyimide, polyamide, polyester, polycarbonate, polyéthylène, polyuréthane, polysulfone ou polypropylène.

3. Une structure d'électrodes selon la revendication 1 ou 2, caractérisée en ce que le matériau conducteur de l'électricité consiste en particules de l'un des corps suivants : oxyde d'indium-etain, In₂O₃, SnO₂, ZnO, Sb₂O₅, Au, Ag, Pt, Cu, Ni ou Cr.

4. Une structure d'électrodes selon l'une quelconque des revendications précédentes, caractérisée en ce que le filtre de couleurs (2) est formé par un procédé d'électrodéposition, un procédé d'impression ou un procédé photolithographique.

5. Une structure d'électrodes selon l'une quelconque des revendications précédentes, caractérisée en ce que la pellicule conductrice de l'électricité (5) est recouverte par une pellicule d'orientation.

6. Une structure d'électrodes selon la revendication 5, caractérisée en ce que la pellicule d'orientation est constituée par l'un des corps suivants : polyimide, silane, alcool polyvinylique, polyamide, polyamideimide, polymère contenant du fluor, SiO, SiO₂, Al₂O₃ ou TiO₂.

7. Une structure d'électrodes selon l'une quelconque des revendications précédentes, caractérisée en ce que la pellicule conductrice de l'électricité (5) est formée par impression, revêtement par centrifugation, pulvérisation ou immersion.

8. Une structure d'électrodes selon l'une quelconque des revendications précédentes, caractérisée en ce que la pellicule conductrice de l'électricité (5) est formée par des bandes.

9. Une structure d'électrodes selon l'une quelconque des revendications 1-7, caractérisée en ce que la pellicule conductrice de l'électricité (5) est formée sur la totalité de la surface du substrat (1) ou sur la partie de ce dernier qui porte les filtres de couleurs (2).

10. Une structure d'électrodes selon l'une quelconque des revendications précédentes, caractérisée en ce que la pellicule conductrice de l'électricité (5) est formée par traitement d'une pellicule d'un composé organométallique, de façon à lui donner une propriété de conductivité électrique.

11. Une structure d'électrodes selon l'une quelconque des revendications précédentes, caractérisée en ce que cette structure d'électrodes fait partie d'un dispositif électro-optique comportant des éléments actifs à transistors à couches minces.

12. Une structure d'électrodes selon l'une quelconque des revendications 1-10, caractérisée en ce que cette structure d'électrodes fait partie d'un dispositif électro-optique comportant des éléments résistifs non linéaires.
